# EUROPEAN PATENT APPLICATION

(11) **EP 1 950 919 A1**
(43) Date of publication of application: **30.07.2008**
(21) Application number: 07425033.3
(22) Date of filing: 24.01.2007
(51) Int. Cl.: H04L 12/56, H04L 29/06

(54) **Method and device for adjusting a buffer and communication system comprising such device**

(71) Applicant: Nokia Siemens Networks GmbH & Co. KG, 81541 München (DE); Siemens Networks S.p.A., 20126 Milano (IT)
(72) Inventor: Balazs, Andras, 85521 Ottobrunn (DE); Binde, Stephan, 82065 Baierbrunn (DE); Prati, Luca, 44100 Ferrara (IT); Seitter, Norbert, 82008 Unterhaching (DE)

(57) **Abstract**

A method and a device for adjusting a buffer is provided comprising steps (i) a first network sends an information concerning a type of an access network to a node; and (ii) the buffer is initialized corresponding to the type of the access network received from the node. In addition, a communication system comprising such device is presented.

## Description

### Field of the Invention

The invention relates to a method and device for adjusting a buffer and communication system comprising such device.

Modern communication systems, e.g., 3G mobile networks, are packet-oriented. Messages are separated in discrete packets of a specific length (in bytes of data or milliseconds of media content) and transmitted via mobile or fixed networks.

An IMS (IP multi-media subsystem) reference architecture according to 3GPP (3rd Generation Partnership Project) Releases 5 and 6 is the standard for convergence of mobile networks (mobile 2G/3G packet-switched (PS) domain, mobile 2G/3G circuit-switched (CS) domain, wireless LAN networks) and fixed networks (Public Switched Telephone Networks (PSTN), via DSLAM (digital subscriber line access multiplexer) connected WLAN and DSL networks). Reference is hereby made to telecommunications standard 3GPP TS 23.002.

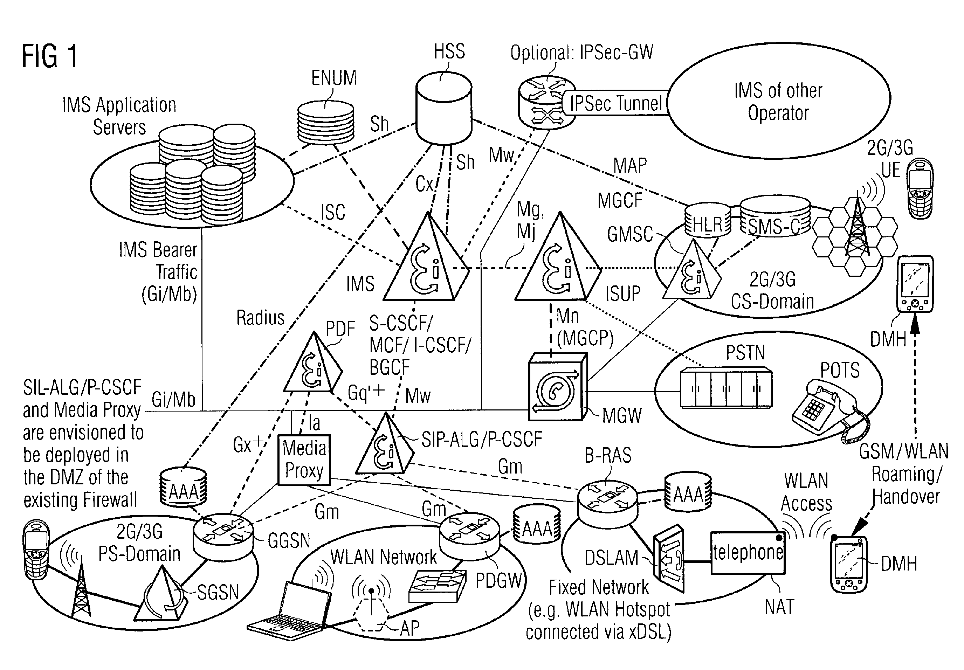

**Fig.1** shows a possible implementation of such an architecture. At the network borders of the different networks there are Media Gateways for converting the different transport formats between the connected networks (e.g. TDM format to ATM format or to IP format).

Due to the de-central structure of the reference architecture that allows to connect a number of different network components (routers, switches, access equipment, etc.) variable absolute delays (channel-dependent) and time-dependent delays (jitter) occur. Data packets cannot be received simultaneously with sending time (delay) and packets of the same data stream show different delays depending on the packet number (jitter). Overall values of delay and jitter are a measure of a quality for the whole network.

Various delay aspects of communication networks have been examined for a long time and are the basis for Quality of Service (QoS) related standards. For example, ITU-T G.114 defines delay values and assigns them to different quality classes. In addition, G.109, G.107 and ETSI TS101.329-7 show the perceivable speech quality in relation to its delay and defines so-called mean opinion score (MOS) quality criteria. The investigation regarding influence of jitter on speech quality is directed to data-packets with significant payload length transported via Voice-over-IP networks.

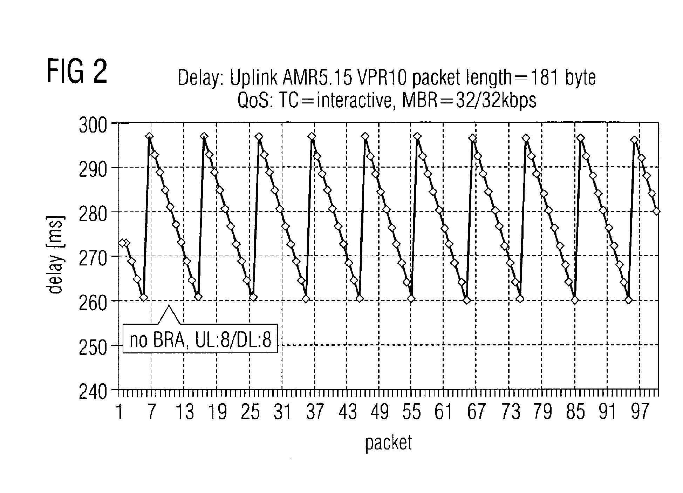

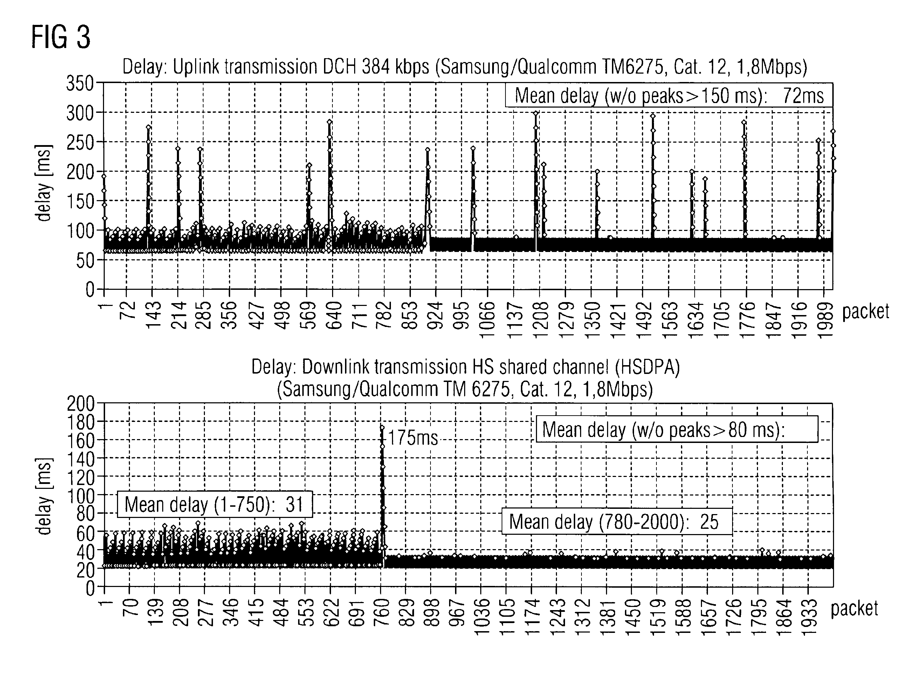

**Fig.2** and **Fig.3** show typical delay variation behaviors and jitter in packet-oriented mobile networks of the 3GPP packet switched (PS) domain.

Fig.2 shows exemplary an interactive 32kbps uplink channel in the PS-Domain with regards of delay in milliseconds over a number of packets. It illustrates a regular delivery of frames, wherein 10 frames are packed and transferred together. This leads to a deterministic delay variation adding up to about 40 milliseconds.

Fig.3 illustrates irregular jitter effects coming from a statistical distribution of packet arrivals that can be characterized as a non deterministic behavior (so-called stochastic jitter). According to a common assumption, the data packets are sent at regular time intervals, but they arrive at a receiving side with variable time delay (jitter). These jitter effects depend on the transmission method of the packets and on the presence of a source rate control. Basically, there is no relationship between jitter and packet content (speech or pause) but in many cases the speech pause samples are transferred differently, e.g., one such packet every 160ms.

Transmission of voice over packet networks (e.g. Voice-over-IP) uses a coding mechanism (e.g., 3GPP AMR, ITU-T G.729, etc.) at the transmission side of the network and a corresponding decoding mechanism at the receiving side of the network. Speech is represented as data packets or frames which are transmitted over the network channel, wherein the channel itself has non-ideal characteristics. Besides a non-ideal impulse response of the communication channel, delay and delay variations (jitter) may result from the channel leading to degraded perceivability and comprehensibility after reconstruction of the speech samples at the receiving side. Especially jitter effects hinder the reconstruction of the original speech data, because such effects impair a continuous flow of packets in the correct order. In a worst case, packets that were sent later can arrive earlier at the receiver resulting in so-called "out-of-sequence" packets. Another possibility is that packets with high jitter arrive at the receiver after the receiver's time window (i.e. time limit) has already been closed and therefore, these packets are lost.

In order to ensure reproduction of the data packets or frames in the right order, an additional delay may be inserted by the receiver. However, this delay could result in an increased end-to-end delay leading to an impairment of the voice quality.

In principle, the problem of jitter could be solved by jitter buffer of sufficient size at the receiving side of the communication system together with a buffer management. Without buffer management a large buffer would not have the desired effect on jitter compensation. For example, a jitter buffer with infinite size will lead to buffer underflow if there is no adequate time to be passed prior to delivering the packets.

This receive path jitter buffer is used for storing received packets and forwards them within distinct synchronization intervals (that can correspond to (or be smaller as) the size of the jitter buffer) to the following units. However, using a jitter buffer for receiving packets results in additional delay, because the buffer management has to wait until a regular data stream can be forwarded to the subsequent unit. Such additional delay deteriorates speech quality. Furthermore, a jitter buffer of large size consumes memory which results in additional costs.

On the other side, a jitter buffer that is too small may not be able to store all packets arriving at the receiver within the time period to be buffered. Packets that arrive at the receiver with a large jitter will be lost, if the buffer is already filled. Moreover, if the jitter buffer size is too small, there will be not enough space in order to feed the output when packets arrive very late. In such case the jitter buffer could become empty.

### Background Art

EP 1 146 678 A1 describes a method to buffer a data stream at its reception. The drift is measured and compared with predefined values. Depending on the result of that comparison, the buffer size will be adapted dynamically such to optimize the transfer of the packets according to some predefined criteria.

The jitter buffer used for calls throughout communication systems comprising, e.g., an IP multimedia subsystem and a circuit switched network, is often dimensioned incorrectly leading to the aforementioned disadvantages.

### Object and summary of the Invention

The **object** to be solved is to avoid the bad effects stemming from incorrectly dimensioned jitter buffers.
This problem is solved according to the features of the independent claims. Further embodiments result from the depending claims.

In order to overcome this problem a method for adjusting a buffer is provided the following steps:
- A first network sends an information concerning a type of an access network to a node;
- The buffer is initialized corresponding to the type of the access network received from the node.

This bears the advantage that the type of the access network within the first network could be used to adjust the buffer, in particular a buffer size of a jitter buffer.

As an embodiment, the node is located at the border to a second network or the node is located within the first network.

In a further embodiment, the first network sends the information concerning the type of access network via a call session control function (CSCF).

In another embodiment, the buffer to be adjusted is a buffer comprising redundant information. This redundant information is in particular frame information. This frame information can comprise or be related to a number of past frames that may be re-sent.

This bears the advantage that the buffer can be flexibly adjusted to store, e.g., frames to an extent that corresponds to the particular needs of the communication (sub-)system.

In yet another embodiment, the buffer is a jitter buffer and the size of the jitter buffer can be adjusted.

In a further embodiment, the node is located in or at the border of at least one of the following systems and/or networks:
- an IP multimedia system, in particular an IP multimedia subsystem (IMS);
- a circuit switched network;
- an IP-based fixed network;
- a network using SIP/SDP signaling;
- a network using RTSP signaling for Video Streaming, Mobile TV or any other streaming application;
- a network using a signaling protocol.

In a further embodiment, the type of access network information is sent within a message of the session initiation protocol (SIP) and/or within a message of the session description protocol (SDP) as, e.g., described in RFC3261 and RFC2327.

Advantageously, the access network information can be encoded as SDP data forwarded to the media server control protocol (MSCP) in the SIP message body

In addition, the method can be applied during a session setup originated from a terminal of the first network to be connected with a terminal of the first or of another, in particular second, network and/or a session setup from the terminal of first or the second network to be connected to the terminal of the first network.

In yet another embodiment, the method for adjusting the buffer may depend on a service, in particular on at least one of the following services:
- data;
- fax;
- speech;
- video.

In yet another embodiment, the method further comprises the following steps:
- Sending a first message of the session initiation protocol (SIP:INVITE) from the terminal (UE-A) of the first network (IMS) to a call session control function (CSCF) within the first network (IMS);
- Sending a second message of the session initiation protocol (SIP:INVITE "access network") from the call session control function (CSCF) to a media gateway control function (MGCF);
- Sending an H.248 message from the media gateway control function (MGCF) to the media gateway (MGW) at the first network or at the border of a second network;
- Initializing the buffer, wherein said buffer could be arranged within the media gateway (MGW).

The H.248 message sent from the media gateway may comprise information related to the access network, in particular the type of the access network.

It is advantageous to use the means of the session initiation protocol (SIP) to transfer the type of the access network. This "access network" information can be used to set the parameters of the jitter buffer, in particular the size thereof, on a predefined value which corresponds to the particular access network. For example, if the "access network" information informs the media gateway that the first network is a packet switched network, the jitter buffer could be set to cover a delay of 50ms. If the "access network" information indicates the first network to be of a circuit switched type, the latency in the jitter buffer may be set to 20ms. This allows the jitter buffer to be set according to the respective type of access network, in particular the type of connection between one user of the first network and one user of the same or a second network.

In a further embodiment, the buffer is initialized with a predetermined value corresponding to the type of the access network provided. Such value could be obtained from a table that is stored within the network node, e.g. in a memory of the multimedia gateway.

As an alternative, the value could be evaluated or have been evaluated before, in particular offline to the call to be connected. Thus, the jitter buffer may be adjusted by providing the steps of detection of a jitter error and adjusting the jitter buffer based on said jitter error detected.

Depending on the network and its jitter characteristics it may be advantageous to insert redundant information into single frames. For example, networks with low jitter respectively low frame loss rates, such as circuit switched (CS) networks need no redundancy information while networks with high jitter respectively high frame loss rates, such as packet switched (PS) networks may benefit from insertion of redundant (speech) frames.

In an alternative embodiment the buffer is adjusted to bear redundant (speech) frames. The type of the access network within the first network is used to adjust the buffer in the network node, in particular the number of past redundant frames to be re-sent.

It is an advantage that based on the jitter error the jitter buffer may be adjusted on an arbitrarily fine level. This allows the method to be adaptive in view of the error itself and hence provide an error-driven feedback loop of adjusting the jitter buffer size.

In addition, several jitter errors can be detected in order to adjust the jitter buffer. Hence, there may be one or more such "jitter error" events that may directly or indirectly influence the adjustment of the jitter buffer, in particular the size of this jitter buffer.

An embodiment is that a rate of jitter errors is determined, e.g., by counting jitter errors for a predetermined period of time, wherein based on this rate the (size of) the jitter buffer is adjusted.

Such determination of the jitter error rate bears the advantage that transient jitter errors could be suppressed, i.e. jitter errors that may occur due to a short-term distortion would have no impact on adjusting the jitter buffer. This is possible as the jitter error rate (e.g., jitter errors per distinct time interval) can be compared to a predefined rate and an adjustment of the jitter buffer is only initiated in case this predefined rate is reached and/or exceeded (by the jitter error rate).

Another embodiment is the aforementioned method further comprising the following steps:
- At least one jitter error message is created based on at least one jitter error;
- The jitter buffer is adjusted based on the at least one jitter error message.

This bears the advantage that a jitter error message can be used to be send to, e.g., a jitter manager, and - directly or indirectly - influence the adjustment of the jitter buffer.

It is another embodiment that the size of the jitter buffer is adjusted depending on the rate of received frames in a receiver. The frames could be also referred to as packets and/or data packets. In particular, the frames may contain information, in particular speech information, wherein said speech information can also comprise speech elements according to the adaptive multi rate (AMR) standard.

In yet another embodiment, the receiver can be arranged within an IP multi-media system, in particular an IP multi-media subsystem (IMS). The receiver can also be or arranged within a multi-media gateway (MGW).

In a further embodiment, the jitter buffer can be part of a receive buffer.

In an advanced embodiment, jitter errors occur when, due to a delay of a frame to be received, the frame itself does not fit into the jitter buffer.

Another embodiment is the aforementioned method further comprising the following steps:
- The frame is received by a jitter control manager;
- The jitter control manager detects the jitter error;
- In case a jitter error occurs, an error message is forwarded to a jitter manager;
- The jitter manager determines the rate of error messages and, in case the rate of error messages is higher than a predetermined threshold, activates a jitter buffer control (JBC);
- The jitter buffer control (JBC) adjusts the size of the jitter buffer.

This allows the size of the jitter buffer to be adjusted based on a rate of error messages processed by a jitter manager. Advantageously, the processing of messages could be split to different threads, processes or processors to be executed separately from each other.

Furthermore, an embodiment provides a jitter buffer decrease manager to reduce the size of the jitter buffer when no jitter error occurs for a predetermined period of time. The jitter buffer decrease manager could also reduce the size of the jitter buffer when no jitter error message is detected for a predetermined period of time. In particular, a timer could be used to measure the predetermined period of time.

Hence, the size of the jitter buffer could not only be increased, but also be decreased. The threshold values allow the jitter buffer size to be adjusted only in case ongoing changes occur in the communication channel. Thus, it is avoided to abruptly change the jitter buffer size due to short term changes of the communication channel and hence impair the quality of the communication channel for the end users.

The aforementioned object is also solved by a device for adjusting a jitter buffer comprising a processor or computer that is equipped such that a method as described before can be run on said processor or computer.

In a further embodiment the device is a communication device, in particular a multi-media gateway. In particular, the device may be connected to at least one packet-switched network and/or at least one circuit-switched network.

It is further provided a communication system comprising the device as described supra.

The means to solve the problem stated above are in particular related to communication networks focused on applications in 2G and/or 3G mobile networks, especially in media gateways. The principles disclosed herein can be further applied to any kind of arbitrary communication networks that are packet-oriented as well as to any data system that has to deal (and hence tries to compensate) jitter effects based on any data transmission.

It is to be noted that a sender usually provides as an output a well and a regular spaced data stream. The receiver, in particular the jitter buffer manager, may be in charge to recover this regular spacing between the data packets. All kind of impairment could be modeled as various delay variations relevant for the specific transport channel. The solutions provided herein are also able to compensate jitter caused by the terminal and/or jitter caused by the access network (data channel) itself.

### Brief description of the drawings

Embodiments of the invention are shown and illustrated in the following figures:
- Fig.4: shows a diagram for explaining the principle of a jitter-afflicted transmission of message packets;
- Fig.5: shows a flowchart of a Jitter Control Manager and a Jitter Manager;
- Fig.6: shows a flowchart of a Jitter Buffer Control;
- Fig.7: shows a flowchart of a Jitter Buffer Decrease Manager and a timer unit associated therewith;
- Fig.8: shows a flowchart of an IMS originated call with an "access network" information field;
- Fig.9: shows a flowchart of a CS originated call with an "access network" information field.

### Detailed description of a preferred embodiment of the Invention

As there is a common tendency that networks converge to one overall network (see Fig. 1), various requirements resulting from single network characteristics apply to such an aggregated network in a similar manner. One issue is an efficient usage of bandwidth in particular with regard to the radio transmission link (i.e. air interface) of the packet switched (PS) domain. Due to the bandwidth requirements, packet header compression procedures are applied or, in case regulatory issues require a different approach, single packets are combined to larger packets in order to reduce the overhead data located at the headers of the packets. For example, two or three adaptive multi rate (AMR) encoded voice frames are combined to one single (and hence longer) data packet, which requires a larger buffer at the receiving side in order to compensate delay and jitter effects.

Different kinds of jitter effects stem from various kinds of coupling different network types. Due to the respective network structure these jitter effects show deterministic characteristics (e.g. synchronization effects) and stochastic behavior (e.g. network access procedures, priorities). As the data packets follow different routes through the network they need different amounts of time as a result to the traffic and the routing throughout the network at the particular time when the data packet is launched. This delay is intrinsic to the technology used, e.g. Ethernet with access protocol "Carrier Sense Multiple Access with Collision Detection".

One embodiment described herein relates to a rate-controlled adaptive jitter buffering procedure, which aims to adapt the size of a jitter buffer to the rate of received packets. The jitter delay is compensated by the policy of the jitter buffer manager based on the fill level of the jitter buffer.

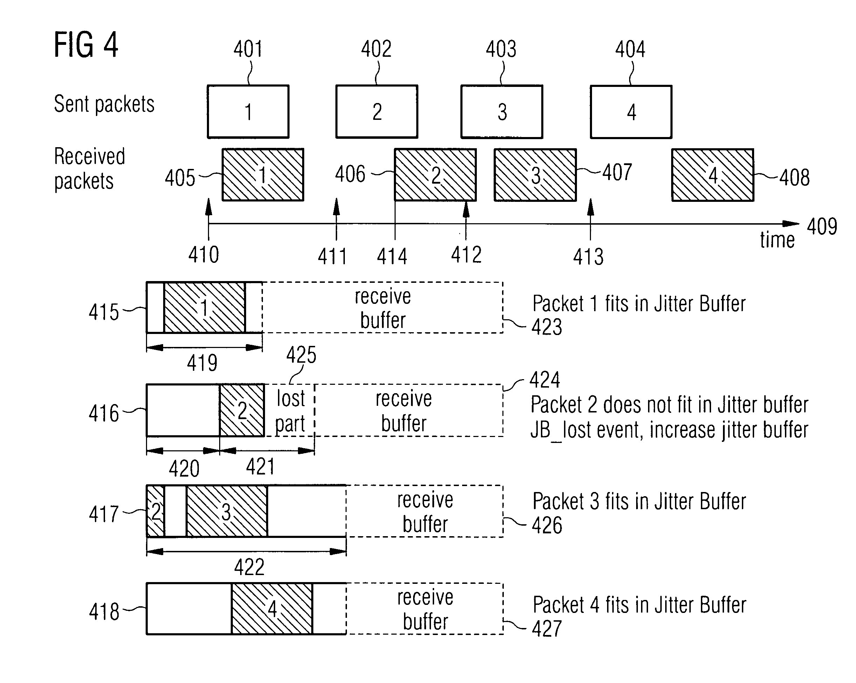

The principle of a jitter-afflicted transmission of message packets is illustrated in **Fig.4**.

A stream of data packets 401, 402, 403 and 404 (No.1 to No.4) is continuously sent by a transmitter. Each packet has a certain length and a fixed temporal distance to the preceding packet. These packets 401 to 404 are sent over a real (i.e. non-ideal) communication channel. At the receiver, data packets 405, 406, 407 and 408 (also No.1 to No.4) arrive delayed and may comprise a jitter (i.e. an individual delay per data packet). Fig.4 shows a timeline 409 to visualize the differences (in time) between the data packets sent (401 to 404) and those received (405 to 408).

Fig.4 further shows different phases 415 to 418 of how a jitter buffer and a receive buffer are used and may be adjusted in response to the data packets 405 to 408 received.

The receiver has synchronization points 411, 412 and 413, which could be computed during an initial synchronization phase. At these synchronization points 411 to 413 the received packets are stored in a receive buffer (see 423, 424, 426, 427). After one or more synchronization point(s) the buffer is overwritten with the next data packet.

While the receive buffer 423, 424, 426, 427 is large enough to capture several data packets received, the first part of this receive buffer is used as jitter buffer 419, 422. A "FILL LEVEL" of the jitter buffer represents a waiting period until a next packet is transferred for further processing. If the jitter buffer is too small, the packet in its full length cannot be transferred for further processing and hence the packet has to be discarded. This applies, e.g., to packet No.2 in phase 416: The jitter buffer 419 is too small to fully store data packet No.2, which leads to a stored part and a lost part 425 of said data packet No.2.

On the other hand, if the jitter buffer is oversized, the additional delay resulting from jitter compensation gets too large and the continuous stream of speech may be interrupted.

In some cases, it may be necessary to provide a long waiting time. This can be the case when data packets arrive anticipated at the receiver.

In order to minimize the delay a packet will spend in the jitter buffer, an "AVERAGE FILL LEVEL" of the jitter buffer is considered. This parameter describes an average time of a data packet spent inside the jitter buffer. It is advantageous to adjust the jitter buffer (size) smoothly, because abrupt variations in time could significantly impair the voice stream.

The method described herein adapts the buffering delay to fluctuating network jitter characteristics by increasing and/or decreasing the reserved buffer part. This adaptation can be performed by an iterative procedure, e.g. a so-called "Leaky Bucket"-algorithm or variations thereof.

After an adjustment that increases the jitter buffer (see phase 417), this enlarged jitter buffer enables transmitting future packets that have the same jitter as data packet No.2. Data packets No.3 and No.4 can thus be stored in this enlarged jitter buffer (see phases 417 and 418) and then transmitted to the following execution units without loss of data.

Hence, the phases 415 to 418 shown in Fig.4 can be summarized as follows: In phase 415, the jitter of received data packet No.1 (405) is small and data packet No.1 can be stored in the jitter buffer 419. In phase 416, this size of the jitter buffer 419 is not sufficient to fully store data packet No.2 (406) which comprises a jitter 420 (corresponding to a time period between points in time 411 and 414). That leads to a lost part 425 of data packet No.2. As this data packet No.2 does not fit in the jitter buffer, a jitter error is detected which could lead to a jitter error message (JB_lost event) produced to increase the size of the jitter buffer. In phase 417 the jitter buffer 422 is increased in size, packet No.3 (407) fits (together with the jitter of this data packet No.3) into the jitter buffer. The same applies in phase 418 to data packet No.4 (408).

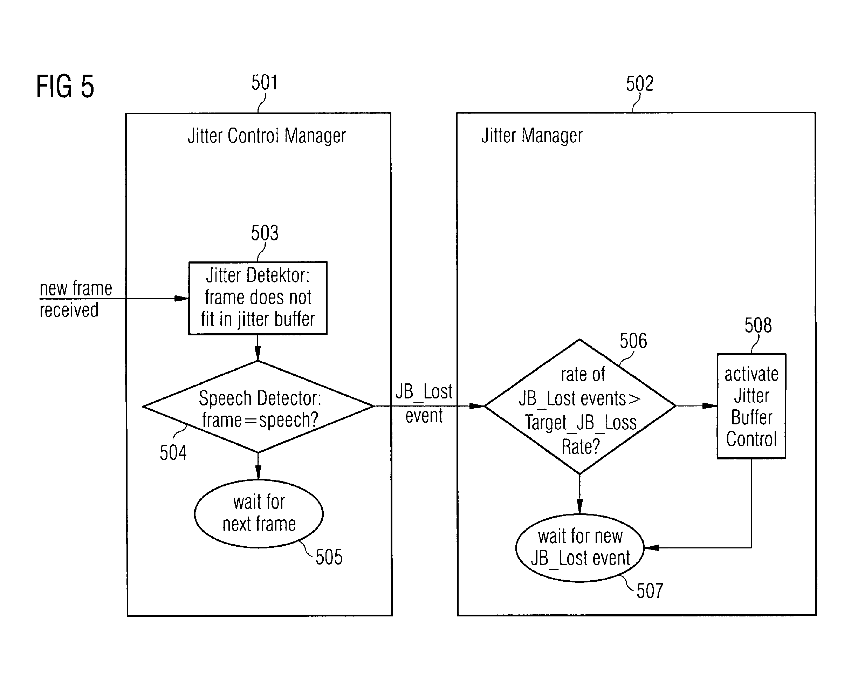

The procedure for controlling the jitter buffer size is further explained with respect to Fig.5, Fig.6 and Fig.7.

A Jitter Control Manager 501 according to **Fig.5** detects jitter errors. A data packet or frame that does not fit into the jitter buffer generates a jitter error. However, this data packet to be discarded for delay optimization by the Jitter Buffer Manager 501 may not be lost, because it can still be stored within the receive buffer.

Hence, according to Fig.5, a new frame received by the Jitter Control Manager 501 is processed by a jitter detector 503 analyzing that the frame does not fit into the jitter buffer. Speech detector 504 checks the data packet by analyzing the frame of the data whether the frame is "speech", "pause" or "silence". Commonly used codecs (ITU-T G.729, 3GPP AMR or others) have a particular information field containing information of the contents of the frame. If the speech detector 504 detects a speech frame having caused the jitter error, it activates the "JB_Lost event" that is sent to a Jitter Manager 502. If the frame does not correspond to "speech", the speech detector 504 jumps to block 505 thereby waiting for the next frame.

Missing packets (due to losses of the communication channel) or "out-of-sequence"-packets are recognized by the sequence number of the packets (see, e.g., RFC 3550, RTP: A Transport Protocol for Real-Time Applications). If the jitter buffer is large enough, large meaning in particular multiple packets fitting into the jitter buffer, out-of-sequence packets can be re-sorted using the sequence number of the single packets. Packets that arrive after the time when they are planned to be delivered by the Jitter Buffer Manager (so-called "Late_Loss") may be discarded, resulting in packet errors.

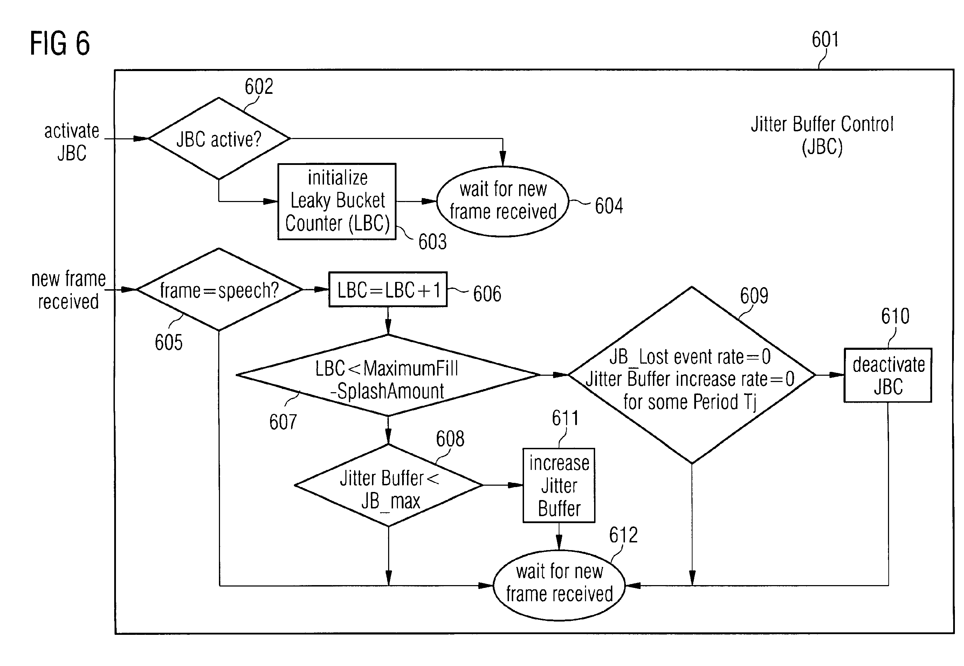

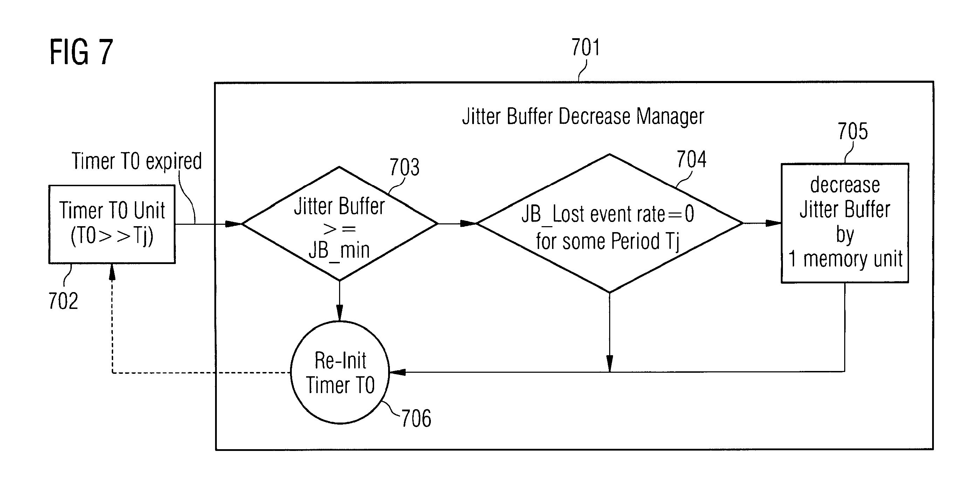

Also variable packet rate or discontinuous transmission can be accepted and compensated by the jitter buffer. It is also possible to specify time limits for a maximum and for a minimum Jitter delay ("JB_max" and "JB_min" according to Fig.6 and Fig.7). Packets that arrive after a maximum tolerable jitter delay JB_max may have to be discarded.

The "JB_Lost events" are sent to the Jitter Manager 502. The Jitter Manager 502 decides in a block 506 whether the rate at which the JB_Lost events arrive at the Jitter Manager 502 is (equal and/or) higher than a predetermined threshold Target_JB_Loss. If this is the case, a Jitter Buffer Control 601 (JBC, see also Fig.6) is activated in block 508.

Subsequently, the Jitter Manager 502 waits for the next (new) JB_Lost event (see block 507). If the rate of JB_Lost events is - to be decided within block 506 - smaller (or equal) than the predetermined threshold Target_JB_Loss, the Jitter Manager 502 also waits for the next (new) JB_Lost event (see block 507).

The rate of JB_Lost events bears the advantage of a well controlled and smooth increase of the jitter buffer (instead of an abrupt increase based on single data samples) thereby avoiding the buffer from growing in an unpredictable and objectionable manner.

The Target_JB_Loss rate is a configuration parameter of the method and can be specified, e.g., by a management system, in order to adjust the Jitter Buffer Control (JBC) to various conditions depending on the respective circumstances.

As an example, it could be avoided to activate the Jitter Buffer Control after each lost frame, since short time jitter peaks can arise in the network (see Fig.3). These short-time peaks may in a preferred mode not have any (or any significant) influence on the adjustment of the jitter buffer size.

The Jitter Buffer Control 601 according to **Fig.6** is, e.g., activated by block 508 in Fig.5.

An "activate JBC" signal is fed to the Jitter Buffer Control 601. In a block 602 it is checked whether the Jitter Buffer Control 601 is yet active. If this is the case, it is branched to block 604 and hence waits for new frames to be received. If the Jitter Buffer Control 601 is not active, a Leaky Bucket Counter (LBC) is initialized in a block 603 and it is further branched to block 604.

After each arrival of a new packet or frame, a speech detector 605 checks if the actual frame is a speech frame. If the frame is a speech frame, the Leaky Bucket Counter is incremented by one in a block 606. Subsequently in a block 607 it is checked whether the Leaky Bucket Counter has already reached an upper border value
MaximumFill - SplashAmount
characterizing a predetermined maximum level for the Leaky Bucket Counter minus a fluctuation reserve.

If this upper border value is reached, next a block 608 is executed, wherein it is checked whether the jitter buffer is still below the predetermined maximum value JB_max. If this is the case, the jitter buffer is increased within step 611.

It is to be noted that such increase of the jitter buffer can be done by one or more units of predefined size.

If the upper border value 'MaximumFill - SplashAmount' is not yet reached, the length of the jitter buffer may remain unchanged. It is branched to a block 609, wherein the rate of the JB_Lost events and the rate of the Jitter Buffer increase rate are calculated for each packet during a predetermined period of time Tj (a so-called sliding window). If both rates, i.e. the JB_Lost event rate and the Jitter Buffer increase rate, within this time interval Tj equal zero, the Jitter Buffer Control 601 will be deactivated in a step 610.

The Jitter Buffer Control 601 will be reactivated (and re-initialized according to blocks 602 and 603) if the JB_Lost event rate is higher than the Target_JB_Loss rate according to block 506 in Fig.5.

Subsequent to block 605 (if the frame is not a speech relevant frame), block 608 (if the jitter buffer is not smaller than the predetermined value JB_max), block 609 (if both rates are not equal 0 for the time period Tj) and block 610 a block 612 is executed, wherein the next frame to be received is awaited.

It is to be noted that the initial value of the Leaky Bucket Counter (LBC), the MaximumFill parameter, the SplashAmount parameter and parameter for the time period Tj can be adjusted according to particular requirements that may differ according to the actual network-environment and/or interfaces the method is applied to.

A parameter set could be calculated via off-line simulations of the communications network according to different scenarios. This may result in a parameter set with robust convergence to small jitter delays and a low packet lost rate. This calculated parameter set could further be adjusted by means of a management system to fulfill the needs of different network operators.

Besides simulation as one possible means to find a convenient parameter setting, it is also possible to derive a set of parameters from the once running network. This approach implies starting with some initial values and running the method in its network environment for a predetermined period of time. The parameters may reach an equilibrium state after this time period and this set of parameters may be useful to be applied as a set of starting parameters in a similar network environment. Hence, this learning process in a real environment may lead to useful results that could exceed the quality of simulation results.

In addition to these steps of continuously increasing the size of the jitter buffer, it is also useful to ensure that the size of the jitter buffer could be reduced. This is achieved by a Jitter Buffer Decrease Manager 701 according to **Fig.7**.

A timer unit 702 waits for a predetermined time T0, whereby this time T0 is significantly larger than the predetermined time period Tj (as introduced above), i.e. T0>>Tj. When the timer 702 expires, a signal "Timer T0 expired" is sent to a block 703. Block 703 checks whether the jitter buffer is larger or equals a predetermined minimum size JB_min for the jitter buffer. If this is true, next a block 704 is executed thereby checking whether the JB_Lost event rate equals 0 for the predetermined period of time Tj. If this is also true, a block 705 is executed and the jitter buffer is decreased by one memory unit. Such reduction of the jitter buffer can, however, also comprise one or more units of predefined size.

Hence, the jitter buffer size can be reduced after some time periods T0 triggered by timer unit 702 in combination with the fact that no minimum size of the jitter buffer is reached and in further combination with the fact that no JB_Lost events occurred during the time period Tj.

If the condition checked in blocks 703 or 704 are not true, the timer T0 is re-initialized in a block 706 and it is branched to block 702. After block 705 is executed, next to be processed is block 706.

The condition T0>>Tj set forth supra ensures that the jitter buffer may increase faster than it may be reduced in size.

The parameter T0 of the timer unit 702 can be adjusted offline and/or be configurable via an outside network management system. An increase as well as a decrease of the size of the jitter buffer could reach an equilibrium state as long as the connected network does not change its characteristics. Changes of the network environment become apparent in a changed JB_Lost event rate, which results in a re-adjustment of the jitter buffer in an upward or a downward direction.

The configuration parameters can be optimized to reach minimum delay and/or minimum frame loss. However, a small delay results in a large frame loss and a small frame loss leads to a large delay. Therefore, adjustment of the configuration parameters needs some balance between delay and frame loss. Simulating the algorithm under real traffic conditions may help finding a good parameter set to start with. Another criteria to be considered is the convergence of the algorithm and the corresponding tracking performance. Convergence means how fast the JB_Lost events are reduced to a minimum under the restriction of minimum (tolerable) processing delay; tracking performance means how fast the adaptation can follow changes of channel characteristics that cause a degradation of delay and frame loss. Suitable parameter sets could be derived by offline simulation of different channels optimizing the convergence and tracking of the algorithm with the parameter set (JB_Max, JB_Min, Target_JB_Loss rate, MaximumFill, SplashAmount, Tj, T0).

The Leaky Bucket procedure presented is only one example of a procedure to be useful to achieve the desired result. Different kinds of procedures in particular various Leaky Bucket algorithms could be applied, for example by decrementing the Leaky Bucket Counter or the like. These algorithms could be used, e.g., for controlling the Jitter Buffer Control unit as described.

During a starting phase, the procedure allows in particular two approaches for jitter buffer adjustment to be used:
a) The method and/or system may start with a small jitter buffer to save memory resources and leave the initial jitter delay as small as possible and adjust to a larger amount of jitter buffer/delay in the course of adaptation.
b) As an alternative, the method and/or system could start with a large(r) jitter buffer to avoid frame losses at the beginning and adjust the buffer to smaller values throughout the running procedure.

The preferred strategy can be configured by the network operator. As the goal is to optimize end-user quality of service (QoS), a defensive strategy could be preferred, i.e. starting with a jitter buffer or considerable large size and reducing it gradually to further improve the end-to-end (E2E) quality of the communication channel. Starting with a short buffer, which might cause high packet loss ratio due to overflow could be deemed disadvantageous.

Another issue to be considered relates to the speed of adaptation of the Jitter Buffer Control 601. Such speed of adaptation could be improved if a knowledge about the characteristics of the actually used access network(s) in the A & B legs of the end-to-end session is used. This could imply a procedure where the jitter buffer control 601 is able to change between preconfigured settings, i.e. "jitter buffer settings" for each access network type, which are supported in various scenarios. Hence, a jitter buffer control decision may tell the operator if the current setting still fits the actual traffic pattern. If this were not the case, it would switch to a different setting and hence improve the expected quality in terms of delay and packet discard ratio. The operator could then upload the jitter buffer characteristics calculated by the adaptive jitter buffer algorithm and use it as starting parameter set for a subsequent run or for a similar environment, e.g., communications network structure.

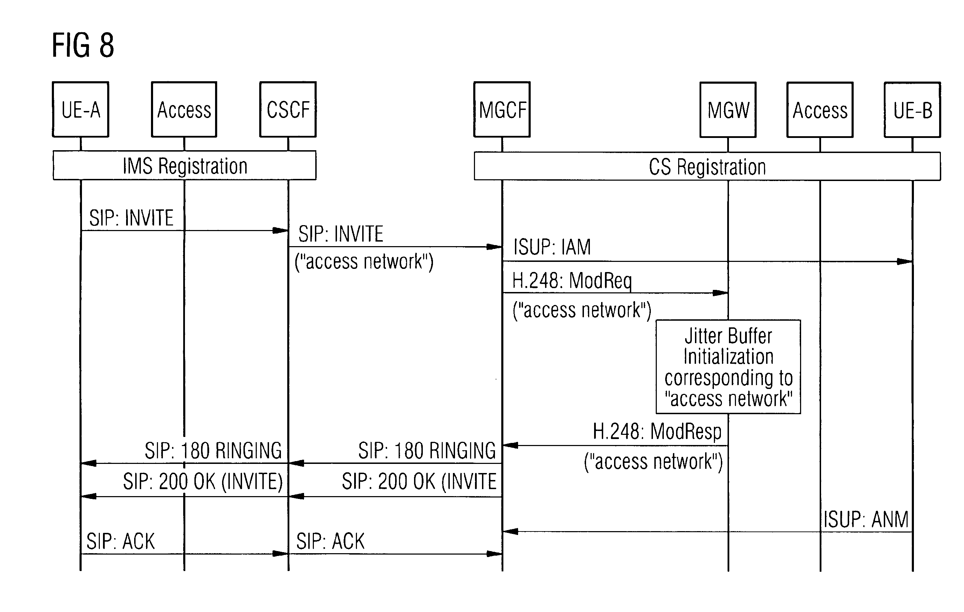

With reference to **Fig.8**, an access network can be selected by analyzing an IP address of a terminal UE-A (user equipment of subscriber A). An additional parameter "access network" provided in the SDP protocol could be used to specify the type of an access network of the terminal UE-A. For example, IMS-originated (IMS = IP multimedia (sub)system) calls forward the type of the access network, i.e. the access network parameter, within a "SIP:INVITE"-message; IMS-terminated calls could provide this access network parameter within a "SIP 200 OK (INVITE)" message.

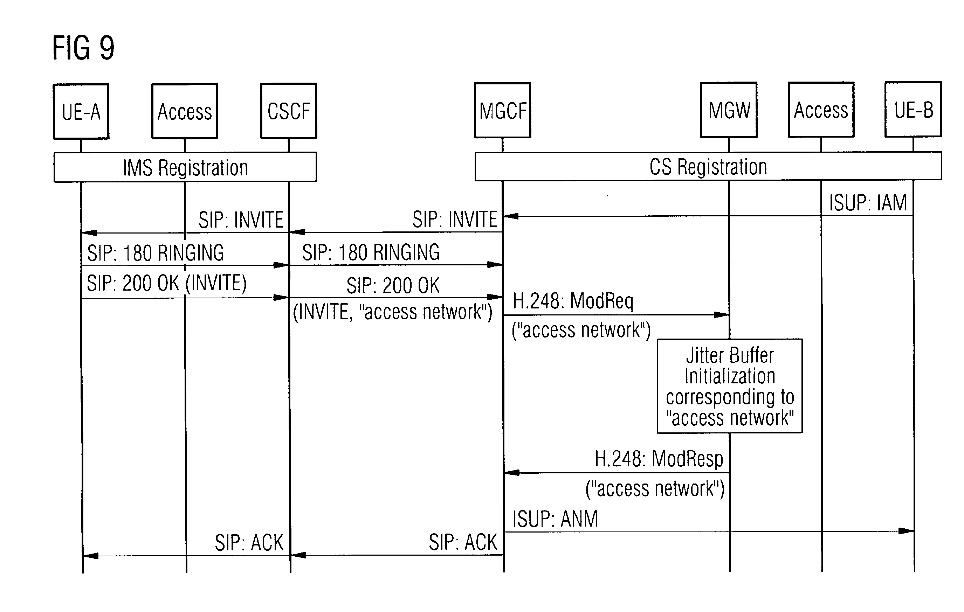

Fig.8 and Fig.9 show exemplary call flows between two users of the IP Multimedia Subsystem (IMS). The examples describe session set-up between a terminal (UE-A) from an IMS domain and a terminal (UE-B) of a circuit switched (CS) domain. Both, Fig.8 and Fig.9, show relevant message sequences, more details on the message flow can be found in document 3GPP TS 29.163.

Fig.8 shows the IMS-originated call: The IMS-user A (UE-A) of a first network wants to originate a call towards a user B (UE-B) of a second network, here a user of the circuit-switched (CS) domain.

The call starts with a "SIP:INVITE"-message that is transferred via an ACCESS and a call session control function CSCF to a media gateway control function MGCF network node, where the SIP protocol is terminated. Within the call session control function CSCF information is available about the type of access network of user A. This information is added in an information field "access network" to the "SIP:INVITE"-message and sent to the media gateway control function MGCF. The media gateway control function MGCF transfers this access network information via H.248-messaging to the media gateway MGW that can subsequently initialize its jitter buffer accordingly.

The media gateway control function MGCF further calls the user B (UE-B) via an ISUP protocol (ISDN user part protocol) with an initial address message (IAM) and thereupon informs the user A by "SIP:180 RINGING" and "SIP:200 OK" messages. After the user B accepted the call via "ISUP:ANM" (ISUP answer message), this is signaled to the user A by a "SIP:ACK"-message and the call is in an active state with the correct initial jitter buffer settings.

**Fig.9** shows the opposite direction of a call originated from the circuit switched (CS) user B (UE-B), who wants to call the IMS user A (UE-A).

The call starts with an initial address message (IAM) that is transferred via the ACCESS and the media gateway (MGW) to the media gateway control function MGCF network node, where the ISUP protocol is terminated. The media gateway control function MGCF calls user A via an "SIP:INVITE"-message. User A answers by sending a "SIP:RINGING"-message and a "SIP:200 OK"-message. These messages are transferred via the call session control function CSCF to the media gateway control function MGCF. The call session control function CSCF knows about the type of access network where user A is located and appends this access network information to an information field "access network" within the "SIP:200 OK (INVITE)"-message. The media gateway control function MGCF transfers this access network information via H.248-messaging to the media gateway (MGW) that can now initialize its jitter buffer according to the access network information. The media gateway control function MGCF sends an "ISUP:ANM" (ISUP answer message) to user B and a "SIP:ACK"-message to user A thereby activating the call with a correct initial jitter buffer setting.

As an alternative, terminal UE-B can be located in a SIP/SDP network and the "access network" parameter can be exchanged via mere SIP/SDP signaling.

In addition, terminals UE-A and UE-B can be located in any kind of network using, e.g., SIP/SDP, ISUP or non-standard extensions of SIP, e.g., SIP-I or SIP-T signaling. The "access network" parameter may then be exchanged via SIP/SDP, ISUP, SIP-I or SIP-T signaling. The breakout nodes at the different network types may be equipped such that they can convert the signaling messages including the "access network" parameter.

For some access network types, e.g., fixed networks, mobile networks, PSTN (public switched telephone network) and PLMN CS (public land mobile network, circuit switched), it could be advantageous to use different fixed jitter buffer sets derived from an earlier application of the method/algorithm as described supra, which could have been, e.g., uploaded in an operator's file storage. However, other access network types, e.g. PLMN PS (public land mobile network, packet switched), use bearer with or without real-time support. For these networks, an adaptive jitter buffer management is deemed advantageous in particular as an a priori adjustment of initial jitter buffer sizes results in improved performance.

## Claims

1. A method for adjusting a buffer comprising the following steps:
- A first network sends an information concerning a type of an access network to a node;
- The buffer is initialized corresponding to the type of the access network received from the node.

2. The method according to claim 1, wherein the node is located at the border to a second network or it is located in the first network.

3. The method according to any of the preceding claims, wherein the first network sends the information concerning the type of the access network via a call session control function (CSCF)

4. The method according to any of the preceding claims, wherein the buffer to be adjusted is a buffer comprising redundant information.

5. The method according to claim 4, wherein the redundant information is frame information, in particular comprising to or related to a number of past frames to be resent.

6. The method according to any of the preceding claims, wherein the buffer to be adjusted is a jitter buffer, in particular a size of a jitter buffer.

7. The method according to any of the preceding claims, wherein the node is located in or at the border of at least one of the following systems/networks:
- an IP multimedia system, in particular an IP multimedia subsystem (IMS);
- a circuit switched network;
- an IP-based fixed network;
- a network using SIP/SDP signaling;
- a network using RTSP signaling for Video Streaming, Mobile TV or any other streaming application;
- a network using a signaling protocol.

8. The method according to any of the preceding claims, wherein the type of the access network is sent within a message of the session initiation protocol (SIP) and/or sent within a message of the session description protocol (SDP) .

9. The method according to any of the preceding claims, wherein the method is applied during a session set-up originated from a terminal of the first network with a terminal of the first or of another network and/or vice versa.

10. The method according to any of the preceding claims, wherein the method for adjusting the buffer depends on a service, in particular on at least one of the following services:
- data;
- fax;
- speech;
- video.

11. The method according to any of the preceding claims further comprising the steps of:
- Sending a first message of the session initiation protocol (SIP:INVITE) from the terminal (UE-A) of the first network (IMS) to a call session control function (CSCF) within the first network (IMS);
- Sending a second message of the session initiation protocol (SIP:INVITE "access network") from the call session control function (CSCF) to a media gateway control function (MGCF);
- Sending an H.248 message from the media gateway control function (MGCF) to the media gateway (MGW) at the first network or at a second network, in particular at a border of the second network;
- Initializing the buffer.

12. The method according to any of the preceding claims, Wherein the H.248 message is sent comprising information related to the access network.

13. The method according to any of the preceding claims, wherein the buffer is initialized with a predetermined value for the type of the access network provided.

14. The method according to any of the preceding claims, wherein the predetermined value is stored in a memory of the node.

15. The method according to any of the preceding claims, wherein the buffer is initialized by a method for adjusting a jitter buffer, comprising the following steps: (claims of parallel application)
- Detection of a jitter error;
- Adjusting the jitter buffer based on the jitter error detected.

16. The method according to claim 15, wherein several jitter errors are detected in order to adjust the jitter buffer.

17. The method according to claim 16, wherein a rate of jitter errors is determined and the jitter buffer is adjusted dependent upon said rate.

18. The method according to any of claims 15 to 16, comprising the following steps:
- At least one jitter error message is created based on at least one jitter error;
- The jitter buffer is adjusted based on the at least one jitter error message.

19. The method according to any of claims 15 to 18, wherein a size of the jitter buffer is adjusted depending on a rate of received frames in a receiver.

20. The method according to claim 19, wherein the receiver is arranged within an IP multi-media system.

21. The method according to any of claims 19 or 20, wherein the receiver is a or arranged within a multi-media gateway (MGW).

22. The method according to any of claims 15 to 21, wherein the jitter buffer is part of a receive buffer.

23. The method according to any of claims 15 to 22, wherein the jitter error occurs when, due to a delay of a frame to be received, the frame itself does not fit into the jitter buffer.

24. The method according to claim 23, comprising the following steps:
- The frame is received by a jitter control manager;
- The jitter control manager detects the jitter error;
- In case a jitter error occurs, an error message (JB_Lost event) is forwarded to a jitter manager;
- The jitter manager determines the rate of error messages and, in case the rate of error messages is higher than a predetermined threshold, activates a jitter buffer control (JBC);
- The jitter buffer control (JBC) adjusts the size of the jitter buffer.

25. The method according to any of claims 15 to 24, wherein a jitter buffer decrease manager is provided to reduce the size of the jitter buffer when no jitter error and/or no jitter error message has been detected for a predetermined period of time.

26. A device for adjusting a buffer, in particular of a network node, comprising a processor unit that is equipped such that the method according of any of the preceding claims is executable on said processor.

27. The device according to claim 26, wherein said device is a communication device, in particular a multi-media gateway.

28. The device according to any of claims 26 or 27, wherein said device is connected to at least one packet-switched network and/or at least one circuit-switched network.

29. A communication system comprising the device according to any of claims 26 to 28.
